# EUROPÄISCHE PATENTSCHRIFT

(11) **EP 2 036 870 B1**
(45) Veröffentlichungstag und Bekanntmachung des Hinweises auf die Patenterteilung: **04.06.2014**
(21) Anmeldenummer: 08163883.5
(22) Anmeldetag: 08.09.2008
(51) Int. Cl.: C04B 28/02, C04B 22/00, C04B 14/06, C04B 18/08, C04B 103/32

(54) **Meerwasser beständige Betonzusammensetzung**
Seawater containing concrete composition
Composition de ciment contenant de l'eau de mer

(30) Priorität: 11.09.2007 DE 102007043270
(43) Veröffentlichungstag der Anmeldung: 18.03.2009
(73) Patentinhaber: GICON windpower IP GmbH, 01219 Dresden (DE)
(72) Erfinder: Jähnig, Jens, 01738 Dorfhain (DE)
(74) Vertreter: Kailuweit & Uhlemann Patentanwälte

(56) Entgegenhaltungen:
- EP-A- 0 439 372
- EP-A- 1 496 029
- WO-A-99/14170
- JP-A- 2001 261 419
- US-A1- 2007 142 506
- DATABASE WPI Week 200031 Thomson Scientific, London, GB; AN 2000-351257 XP002506162 & CN 1 247 172 A (UNIV QINGHUA) 15. März 2000 (2000-03-15)
- EDITED BY P.C.HEWLETT: "THE CHEMISTRY OF CEMENT AND CONCRETE" LEA'S CHEMISTRY OF CEMENT AND CONCRETE, 1998, Seiten 312-319, XP002506204 4rth Edition, BUTTERWIRTH-HEINEMANN, Oxford, GB

## Beschreibung

Die vorliegende Erfindung betrifft eine Betonzusammensetzung die für Anwendungen geeignet ist, in denen ein Betonbauwerk mit Meerwasser in Berührung kommt oder im Meerwasser errichtet wird.

Eine Betonzusammensetzung wird durch Zugeben von Zement und Wasser sowie ggf. weiteren, die Eigenschaften des Frisch- oder Festbetons beeinflussenden Substanzen zu gekörnten, mineralischen Zuschlagstoffen, die als Gesteinskörnung bezeichnet werden, und Mischen der Mischung hergestellt. Gewöhnlich ist die Gesteinskörnung durch von Flusskies, Kiesgruben und in Steinbrüchen gewonnenen Kies gebildet. Der Kies wird zerkleinert und nach Korngröße klassiert. Die Körner werden in einem bestimmten Korngrößenverhältnis miteinander vermischt, wobei größere Körner mit einem Durchmesser von etwa 16 mm bis etwa 64 mm in der Regel einen großen Anteil bilden. Aufgrund knapper natürlicher Ressourcen werden in verstärktem Maße auch künstliche Gesteinskörnungen oder auch rezyklierte Baustoffe eingesetzt. Nichtsdestoweniger bleibt Beton auch aufgrund der teuren Zementherstellung ein kostspieliger Baustoff.

Beton wird zunehmend auch im Meerwasser sowohl in Ufernähe, bspw. zur Aufspülung von Land oder zur Bauwerkstabilisierung, als auch in größeren Entfernungen vom Ufer und in größeren Tiefen eingesetzt, um bspw. Pipelines zu sichern oder Seefahrtzeichen, Bojen, Sendemasten, Funktürme oder Offshore-Windkraftwerke auf See zu verankern. Es ist bekannt, zu diesem Zweck Gründungskörper, z.B. Stahlkonstruktionen mit einer Schalung für einen Füllstoff, am Meeresboden mit Ortbeton zu füllen. Der Beton wird auf speziell dazu eingerichteten Schiffen auf See gemischt und auf den Meeresgrund gepumpt. Es müssen große Mengen an Beton bereitgestellt werden, wobei die Betonbestandteile, einschließlich des Zementes, der Gesteinskörnung und des als Anmachwasser verwendeten Süßwassers, zum Teil über sehr weite Strecken von ihrem Gewinnungs- bzw. Herstellungsort zu ihrem Einsatzort transportiert werden müssen. Der mit der Beschaffung, Bevorratung und Lieferung verbundene Aufwand und die Gesamtkosten einer Baumaßnahme sind hoch.

Beton, der mit Meerwasser in Berührung kommt oder im Meerwasser eingesetzt wird, muss besonderen Anforderungen genügen. Als Frischbeton muss er gut verarbeitbar, fließfähig und pumpfähig sein und sollte ein geringes Schwindverhalten aufweisen. Der Festbeton sollte er vor allem eine ausreichende Dichte, eine anwendungsbedingte hohe Druckfestigkeit und Dauerhaftigkeit haben. Für Stahlbeton ist eine hohe Korrosionsfestigkeit wichtig.

Insbesondere sollte der Beton den chemischen, erosiven und biogenen Wirkungen des Meeres standhalten können. Hier sind vor allem ein hoher Widerstand des Betons gegen schädliches Sulfattreiben, das durch Bildung von Thaumasit und Ettringit bei der Hydratation des Zementes entsteht, und eine geringe Empfindlichkeit auf die Alkali-Kieselsäure-Reaktion oder den Algenbefall erwünscht.

Zahlreiche internationale und nationale Normen, bspw. die DIN-Norm 1045-2:2002-07, regeln die an bestimmte Betonarten, einschließlich Stahlbeton und Beton, der mit Meerwasser in Berührung kommt, gestellten Anforderungen und schreiben Rahmenbedingungen, wie Mindestzementgehalt, höchstzulässigen Wasser/Zement-Wert (w/z-Wert) oder zulässige Zuschlagstoffe und Zusatzmittel vor. Dadurch wird für eine spezielle Anwendung, z.B. für Unterwasserbeton, eine ausreichende Qualität sichergestellt. Allerdings sind Betonzusammansetzungen nach den Vorschriften für die hier vorgesehenen anspruchsvollen Anwendungen in tiefem Meerwasser und in einiger Entfernung zur Küste nur mit hohem Aufwand in Bezug auf die Bereitstellung der geforderten Komponenten einsetzbar. Das macht sie z.B. für die Verankerung von Offshore-Windkraftanlagen ungeeignet. Außerdem führen die Regelwerke zu einer Vereinheitlichung der jeweiligen Betonrezepturen und zu hohen Kosten des Betons und der geschaffenen Anlagen. Es besteht aber stets der Wunsch, die Wirtschaftlichkeit einer Anlage zu erhöhen.

Die Druckschrift DE 35 11 044 A1 beschreibt einen Beton, der aus einer verdichteten Mischung eines Erdaushubs aus einer beliebigen Baugrube, auch aus Sand, Meersand, Flugasche, Schlick und dgl., mit Portlandzement unter Zusatz anorganischer Substanzen hergestellt ist. Der Beton soll als biologischer Beton Lehmmörtel ersetzen und insbesondere als Isolierbeton zur Herstellung von Hohlblocksteinen, Ziegeln, Zwischenwandplatten, Straßenbelag oder Isolieraußenputz verwendet werden.

Die Druckschrift DE 691 18 723 T2 beschreibt eine auf Portlandzementklinker beruhende Zusammensetzung, die zur Erhöhung der Schlagfestigkeit durch Eisenmetallfasern verstärkt ist. Die Zementzusammensetzung wird zur Beschichtung von Schweißbereichen zwischen aneinander geschweißten Stahlrohrabschnitten verwendet. Hierzu wird der Schweißbereich in eine Form eingebracht und der Formraum mit der Zementzusammensetzung, die mit Wasser angemacht ist, gefüllt. Es ist erwähnt, dass für die Anmachzwecke auch Seewasser verwendet werden kann. Nach Abbindung der Zusammensetzung wird die Form entfernt, und die Rohre können unter Wasser verlegt werden.

Die Druckschrift WO 99/14170 betrifft eine Betonzusammensetzung mit einem Aggregat, das bekannte feste Bestandteile enthält, und beschreibt, dass es für den Fall, dass das Aggregat Ofenschlacke als Hauptkomponente aufweist, möglich ist, Meerwasser für die Anmachzwecke zu verwenden. In einem Beispiel ist ein Teil des Aggregats durch Meersand ersetzt.

Die Datenbank WPI Thomson Scientific; London, GB; AN 2000-351257 & CN 1 247 172 A; 15.03.2000; offenbart einen blockförmigen Baustoff, der u. a. aus Meerwasser, Meersand, Zement und Flugasche zubereitet wird.

Die Druckschrift EP 0 439 372 A2 beschreibt Betonzusammensetzungen für Offshore-Anwendungen, die Zemente, z.B. Portlandzement, Aggregate feiner Gesteinskörnung der Größe von 0,09 bis 1,0 mm und grober Gesteinskörnung von 1 bis 10 mm sowie weitere Zuschlagstoffe und Zusatzmittel enthalten. Es ist auch der mögliche Einsatz von Meerwasser für Anmachzwecke erwähnt.

Die Veröffentlichung "The chemistry of cement and concrete", edited by T.C. Hewlett, 1988, Seiten 312-319, 4. Ausgabe, BUTTERWIRTH-HEINEMANN, Oxford, GB, befasst sich mit der Verbesserung des Sulfatwiderstandes im Beton durch geeignete Zementarten und -anteile. Es ist erwähnt, dass 20% von Portlandzement durch Flugasche ersetzt werden können.

Die Druckschrift US 2007/0142506 A1 beschreibt ein als CSSB bezeichnetes Additiv und ein Verfahren zur Behandlung ungeeigneter In-Situ-Baustoffe, z.B. Erde, erdhaltigen Tons, Tonstein, salzhaltigen Sand, Salzwasser etc., um sie zur Herstellung von Zementbeton geeignet zu machen. Bei der Betonherstellung werden die ungeeigneten In-Situ-Baustoffe mit dem CSSB-Additiv behandelt und passend aufbereitet, insbesondere von Abfall- und Reststoffen befreit und gemahlen.

Für die hier vorgesehenen anspruchsvollen Anwendungen im Meerwasser, insbesondere den Einbau am Meeresgrund, z.B. zum Herstellen von Fundamenten für Offshore-Windkraftanlagen, Sendemasten oder dgl., sind die aus den vorstehenden Druckschriften bekannten Betonzusammensetzungen nicht vorgesehen und/oder nicht geeignet. Sie sind nur mit hohem Aufwand und hohen Kosten einsetzbar.

Es ist deshalb eine Aufgabe der vorliegenden Erfindung, eine neue Meerwasser beständige Betonzusammensetzung zu schaffen, die sich zur Verankerung von Offshore-Windkraftanlagen oder für sonstige hier angegebene Anwendungen eignet. Insbesondere sollte die Betonzusammensetzung, die für diese Anwendungen erforderlichen Eigenschaften des Betons, wie hohe Dichte und Druckfestigkeit, ermöglichen und für einen längeren Nutzungszeitraum dauerhaft sein.

Außerdem ist es eine Aufgabe der vorliegenden Erfindung, eine derartige Betonzusammensetzung zu schaffen, die mit einem wirtschaftlich vertretbaren Aufwand hergestellt werden kann und unter den besonderen Bedingungen für den Einbau im bzw. unter Meerwasser geeignet ist.

Diese Aufgabe wird durch die Betonzusammensetzung mit den Merkmalen des Patentanspruchs 1 gelöst.

Die Betonzusammensetzung weist in herkömmlicher Weise eine Gesteinskörnung als Zuschlagstoff, ein Zement als Bindemittel und Anmachwasser auf. Diese Bestandteile werden in einem bestimmten Verhältnis miteinander vermischt. Gemäß der Erfindung weist die Gesteinskörnung Meereskies mit hohem Sandanteil und das Anmachwasser Meerwasser auf. Dabei handelt es sich bei dem Meereskies um am Meeresgrund befindlichen Kies, der, wie festgestellt wurde, eine sehr sandhaltige, feinkörnige Zusammensetzung aufweist. Unter "Meer" oder "See" werden hier die miteinander verbundenen Gewässer der Erde, die die Kontinente umgeben, im Gegensatz zu den auf Landflächen liegenden Binnengewässern verstanden. Insofern weist das Meer- bzw. Seewasser im Vergleich zu normalerweise für Betonzusammensetzungen verwendetem Süßwasser einen hohen Salzgehalt auf.

Es hat sich überraschender Weise herausgestellt, dass sowohl Meereskies, trotz seines hohen Sandanteils und darin enthaltener Salze, als auch salzhaltiges Meerwasser in Kombination miteinander als Betonbestandteile verwendbar sind und gute Eigenschaften sowohl des Frischbetons als auch des Festbetons ergeben. Der Frischbeton lässt sich gut verarbeiten, ist fließ- und pumpfähig und erosionsfest. Er ist für die Förderung und den Einbau unter Wasser gut geeignet. Es kann eine geringe Hydratationswärmefreisetzung erzielt werden, was eine geringe und kontrollierte Rissbildung sowie reduziertes Sulfattreiben zur Folge hat. Der Festbeton ist sehr dicht, druck- und zugfest und weist einen hohen Elastizitätsmodul auf. Untersuchungsergebnisse lassen darauf schließen, dass die Betonzusammensetzung relativ alkaliunempfindlich und gegen chemischen und biogenen Angriff aus dem Meer widerstandsbeständig ist. Somit ist die Grundlage für eine hohe Dauerhaftigkeit und lange Lebensdauer gegeben.

Durch die Erfindung kann ein erheblicher, bisher für Betonzusammensetzungen nicht verwendeter Vorrat einer natürlichen Gesteinskörnung verwendet werden, so dass natürliche Kiesvorräte an Land sowie teure Recyclingstoffe eingespart werden können. Es ist möglich, den Zuschlagstoff in der Nähe des Einsatzortes oder sogar unmittelbar am Einsatzort zu gewinnen, was insbesondere in größerer Entfernung vom Ufer von Vorteil ist. Der Meereskies kann dort bspw. mit einem Spülbaggerschiff gefördert werden. Die gewöhnlich sehr hohen Kosten für Beschaffung und Transport können deutlich verringert werden. Dies gilt auch für das Anmachwasser, das ebenfalls direkt vor Ort gewonnen und verwendet werden kann.

Gemäß der Erfindung wird eine unklassierte Gesteinskörnung eingesetzt. Entgegen der gängigen Praxis wird der Meereskies unaufbereitet, so wie er dem Meeresboden entnommen wird, verwendet. Der Aufwand, den Kies nach Norm aufzubereiten, zu klassieren und zu mischen, und die damit verbundenen Aufbereitungsanlangen können vermieden werden. Vorteilhafterweise ist festgestellt worden, dass in dem Meereskies enthaltene organische Bestandteile, Muschelschalen und dgl. die Eigenschaften des Betons nicht beeinträchtigen.

In einer insbesondere für Offshore-Anwendungen geeigneten Ausführungsform der Erfindung ist die Gesteinskörnung allein durch Meereskies gebildet, während das Anmachwasser allein durch Meerwasser gebildet ist. Eine Beimischung an Land gewonnener Kiese, Recyclingstoffe und/oder Süßwasser ist, sofern nicht erforderlich, nicht vorgesehen. Der Meereskies und das Meerwasser werden vorzugsweise der gleichen Lagerstätte entnommen. Hierunter ist ein räumlich begrenzter Bereich eines Meeres bzw. einer See zu verstehen, in dem die Wassereigenschaften, insbesondere der Salzgehalt, annähernd konstant sind. Die einzelnen Gewinnungsorte können zwar mehrere Kilometer voneinander entfernt liegen, an beiden Orten sollte aber im Wesentlichen das gleiche Meerwasser vorliegen. Ein Beispiel für eine gemeinsame Lagerstätte bildet die Ostsee. Jedenfalls ist festgestellt worden, dass Meereskies und Meerwasser aus einer gemeinsamen Lagerstätte gut miteinander verträglich sind. Obwohl die Zusammenhänge schwer zu erforschen sind, wird angenommen, dass sich in diesem Fall hinsichtlich der chemischen und biegenen Reaktionen zwischen dem Meerwasser und dem Meereskies über Jahrzehnte oder Jahrhunderte hinweg ein Gleichgewicht eingestellt hat, der den positiven Eigenschaften des Betons zugute kommt. Bspw. werden Salzkonzentrationsgefälle im Beton vermieden, und die Empfindlichkeit auf die Alkali-Kieselsäure-Reaktion ist vermindert. Trotz hoher Chlorid- und Sulfatgehalte erweist sich der Beton als weitgehend korrosionsfest und ist als Stahlbeton verwendbar.

Die Gesteinskörnung ist vorzugsweise auf eine bestimmte maximale Größe begrenzt. Der maximale Korndurchmesser kann bspw. 32 mm betragen, vorzugsweise ist er sogar kleiner als 16 mm. Dadurch wird ein gleichmäßiger Verbund des Betons erzielt. Größere Gesteinskörner können bereits bei Förderung ausgesiebt werden.

Es wird vorzugsweise ein getrockneter Meereskies verwendet, da er sich besser verarbeiten lässt und einen kontrollierbaren Abbindeprozess ermöglicht. Der Wassergehalt sollte maximal 10 Masse-%, bezogen auf die Gesamtmasse der Gesteinskörnung, betragen. Vorzugsweise beträgt er weniger als 8 Masse-%.

Die Gesteinskörnung weist einen Sandanteil mit der Korngröße bis 4 mm von wenigstens 70 Masse-%, vorzugsweise wenigstens 80 Masse-%, bezogen auf die Gesamtmasse der Gesteinskörnung auf. In einer Ausführungsform beträgt er sogar annähernd 90 %. Damit wird eine extrem sandreiche Zusammensetzung und somit ein Sandbeton erhalten. Die Sandkörner weisen eine im Wesentlichen kugelförmige Struktur mit einer glatten Oberfläche auf. Eventuell ist die Sandstruktur für die besonders hohe Dichte und Druckfestigkeit des Betons mitursächlich.

Das Anmachwasser sollte einen Salzgehalt von maximal 3 % aufweisen. Vorzugsweise beträgt der Salzgehalt weniger als 2 %. Ostseewasser mit einem Sulfat- und Chlorid-Gehalt von weniger als 1,5 % hat sich für die vorliegende Anwendung als besonders gut geeignet erwiesen. Das sowohl im Meerwasser als auch im Sand enthaltene Chlorid wird in der erfindungsgemäßen Zusammensetzung größtenteils dauerhaft gebunden. Das Eindringen von Chlorid aus dem Meerwasser in den Beton kommt, wie festgestellt wurde, bei dem dichten Gefüge des erfindungsgemäßen Betons schnell zum Erliegen. Auch der Sulfat-Gehalt hat sich hinsichtlich der Korrosion als relativ unbedenklich erwiesen, so dass die erfindungsgemäße Betonzusammensetzung zur Verwendung als Stahlbeton geeignet ist.

Der verwendete Zement ist speziell ausgewählt, damit er eine geringe Hydratationswirkung aufweist. Damit werden Spannungen im Abbindeprozess vermieden, was eine geringe Rissbildung und Korrosionsanfälligkeit für eine Bewehrung oder Stahlkonstruktion zur Folge hat. Trotz der festgestellten geringen Alkaliempfindlichkeit der Gesteinskörnung sollte der Zement ferner einen niedrigen wirksamen Alkaligehalt und einen hohen Sulfatwiderstand aufweisen. Bevorzugterweise werden hüttensandhaltige Zemente eingesetzt, mit denen besonders rissarme, dichte Gefüge des Betons erzielt werden können. Hierzu haben sich insbesondere CEM II/A- oder CEM II/B-Portlandzementarten bei Untersuchungen als geeignet erwiesen.

In einer bevorzugten Ausführungsform wird ein CEM III/B-Hochofenzement mit einem Hüttensandanteil von vorzugsweise etwa 70 % bis 75 % eingesetzt. Dieser zeichnet sich dadurch aus, dass er HS-Qualität (nach DIN 1164) aufweist, d.h. sulfatbeständig ist, so dass er den Widerstand des Betons gegen die Traumasitreaktion deutlich erhöht, und außerdem dadurch, dass das Beton-Kapillargefüge gerade durch die Hüttensandkomponente stark reduziert wird, so dass eine Diffusion von Sulfationen erschwert wird. Außerdem weist er einen besonders niedrigen wirksamen Alkaligehalt auf. Ferner ist bei der Verwendung eines CEM III-Zementes die besonders langsame und geringe Wärmeentwicklung beim Erhärten von Vorteil, weil damit niedrigere Bauteiltemperaturen und infolgedessen geringere Zwangskräfte und Spannungen sowie eine reduzierte Rissbildung in einem Bauteil zu erwarten sind. Auch für den Fall, dass Meerwasser in Risse eindringen könnte, ist ein CEM III-Zement augrund seiner vorerwähnten Eigenschaften einem CEM II-Zement vorzuziehen. Insgesamt stellt ein CEM III/B-Zement, insbesondere ein Zement des Typs CEM III/B 32,5 N HW/HS/NA die Grundlage zur Sicherstellung einer guten Dauerhaftigkeit von im Meerwasser errichteten Betonbauwerken.

Außerdem ist festgestellt worden, dass der Zementgehalt zum Teil geringer gewählt werden kann, als dies einschlägige Normen, bspw. die DIN-Norm 1045-2:2002-07 für Stahlbeton und für Beton, der mit Meerwasser in Berührung kommt, vorschreiben. Der in diesem Fall vorgeschriebene Zementgehalt von wenigstens 280 kg/m³ kann bei einem CEM II/B-Zement ohne Qualitätsverlust des Betons unterschritten werden. Insbesondere kann der Zementgehalt weniger als 250 kg/m³ betragen. Vorteilhafterweise hat ein verringerter Zementanteil eine verringerte Hydratationswärmeentwicklung und damit geringere Verformungen und Spannungen im Bauteil zur Folge und erhöht außerdem die Wirtschaftlichkeit. Bei Verwendung eines CEM III-Zementes hat sich jedoch ein Zementgehalt gemäß der DIN-Norm 1045-2 von wenigstens 280 kg/m³, insbesondere ein Gehalt von etwa 300 kg/m³, als besonders geeignet erwiesen.

Die erfindungsgemäße Betonzusammensetzung weist als weiteres Bindemittel Flugasche auf, die besonders gewählt ist, um eine hohe Dichteerhöhung bei möglichst großer Volumenreduktion zu erzielen. Vorzugsweise wird Steinkohlefilterasche verwendet, die durch elektrostatische oder mechanische Abscheidung von staubartigen Partikeln aus Rauchgasen von Feuerungen erhalten wird, die mit fein gemahlener Steinkohle befeuert werden. Es kann auch eine hochqualitative Braunkohlenfilterasche verwendet werden. Jedenfalls wird ein kostengünstiges Industrieabprodukt genutzt, um den Zementeinsatz zu verringern. Vorteilhafterweise bindet Flugasche wie Hüttensand Alkalien und vermindert deren Konzentration in der Porenlösung des Betons.

Überraschenderweise ist festgestellt worden, dass die Wirksamkeit der Flug- bzw. Filterasche bei der erfindungsgemäßen Betonzusammensetzung weit größer ist als in den gängigen Vorschriften, z.B. DIN EN 206-1 oder DIN 1045-2, spezifiziert. Die erzielte Dichte und Festigkeit ist viel höher als erwartet. Es wird angenommen, dass dies auf neue Wirkprinzipien, wahrscheinlich auf eine bislang unbekannte Wechselwirkung der Flugasche mit dem Meerwasser oder mit dem Zementleim aus Zement und Meerwasser zurückzuführen ist. Es ist jedoch nicht ausgeschlossen, dass es hierfür auch andere Ursachen dafür gibt. Mit dem äquivalenten Wasser/Zement-Wert alleine lässt sich der hohe Wirkungsgrad der Flugasche jedenfalls nicht erklären.

Aufgrund des erhöhten Wirkungsgrads der Flugasche kann auch deren Wirkungsmenge im Vergleich zu den Normvorschriften deutlich erhöht und im Gegenzug der Zementanteil verringert werden. Vorzugsweise weist die erfindungsgemäße Betonzusammensetzung ein Verhältnis zwischen Flugasche und Zement von wenigstens 1:2 oder sogar bis zu 1:1 auf. Bei Verwendung eines CEM II-Zementes könnte eventuell sogar doppelt so viel Flugasche wie Zement enthalten sein. In einer bevorzugten Ausführungsform mit einem CEM III/B-Zement beträgt das Verhältnis etwa 0,8. Jedenfalls können durch den erhöhten Einsatz von Flugaschen Herstellungskosten der Betonzusammensetzung werden weiter verringert.

Die erfindungsgemäße Betonzusammensetzung kann weitere Zuschlagstoffe und Zusatzmittel aufweisen. Für die Unterwasseranwendung wird vorzugsweise ein Unterwassercompoundmittel, also ein Stabilisator, der den Zusammenhalt von Beton unter Wasser in starkem Maße erhöht, zugegeben. Für den Transport- oder Pumpbeton sollte ein Fließmittel, vorzugsweise ein Hochleistungsverflüssiger hinzugefügt werden, der den Wasseranspruch des Betons vermindert und dadurch seine Verarbeitbarkeit und die Fließwirkung über einen längeren Zeitraum verbessert. Derartige Unterwassercompoundmittel und Fließmittel sind an sich aus der Technik bekannt.

Weitere vorteilhafte Einzelheiten von Ausführungsformen der Erfindung ergeben sich aus Unteransprüchen und der nachfolgenden Beschreibung bevorzugter Ausführungsformen. Die vorliegende Erfindung wird nun in den folgenden Beispielen und durch sie erläutert.

Die Beispiele betreffen eine erfindungsgemäße Betonzusammensetzung, die als Füllstoff für ein Verankerungselement von Offshore-Windkraftanlagen, Seefahrtzeichen, Sendemasten und dgl. entwickelt worden ist. Das Verankerungselement besteht aus einer Stahlkonstruktion, die von einem Gewebe umgeben ist, das als Schalung für den Füllstoff dient. Der zu verwendende Füllstoff sollte die erforderliche Dichte haben, die statisch notwendigen mechanischen Kenngrößen aufweisen, für den Nutzungszeitraum von vorzugsweise über 20 Jahren dauerhaft sein und mit einem wirtschaftlich vertretbaren Aufwand hergestellt werden können. Ferner sollte der Füllstoff unter den besonderen Bedingungen für einen Einbau unter Wasser geeignet sein und eine Herstellung unter Offshore-Bedingungen ermöglichen.

Tabelle 1 zeigt drei beispielhafte Rezepturen. Wie zu ersehen, ist hierzu vor allem Ostseesand bzw. -kies als Gesteinskörnung, Ostseewasser als Anmachwasser und Flugasche als Bindemittel verwendet worden.

**Tabelle 1**

| **Komponenten** | **Rezeptur 1 vergleichend** | **Rezeptur 2 erfindungsgemäß** | **Rezeptur 3** |
|---|---|---|---|
| Ostseesand | 1319 kg | 1373 kg | |
| Zement Deuna | 360 kg | 240 kg | 300 kg |
| | CEM II/A-S 42,5 R | CEM II/B-M(S-LL) 32,5 R AZ | CEM III/B 32,5 N NW/HS/NA |
| Ostseewasser | 230 l | 200 l | 200 l |
| Flugasche Arzberg (Filterasche) | 140 kg | 260 kg | 240 kg |
| Zusatzmittel BV (Verflüssiger) | 9 kg | 6 kg | |
| Zusatzmittel ST(Stabilisator) | 0,11 kg | 0,07 kg | |
| (w/z) eq | 0,57 | 0,64 | 0,50 |
| Flugasche k(f) -Wert | 0,7 | 0,4 | 0,4 |

Der Ostseekies stammte aus dem Gewinnungsgebiet Kühlungsborn und wurde unaufbereitet von der Halde entnommen. In einem Prüflabor wurden sedimentpetrographische und bodenmechanische Prüfungen vorgenommen. Die Untersuchung und Bewertung erfolgte unter anderem nach der DIN EN 12620: 2003-04 und der DIN V 2000-103:2004-04. Die Prüfung der Kornzusammensetzung ergab einen Sandanteil der Korngröße bis 4 mm von 90 % und einen Anteil der Korngröße zwischen 4 und 16 mm von 10 %, also eine extrem sandreiche Zusammensetzung. Die Untersuchung der Gesteinskörnung auf alkaliempfindliche Bestandteile nach der Richtlinie des Deutschen Ausschusses für Stahlbeton "Vorbeugende Maßnahmen gegen schädigende Alkalireaktion im Beton" ergab für Opalsandstein und für Opalsandstein und Flint in den Korngrößenklassen 1/1, 2/4, 4/8, 8/16 und 16/32 die Bewertung "unbedenklich" (EI-O und EI-OF).

Das Ostseewasser wurde aus der Warnowmündung entnommen. Analysen ergaben, dass hinsichtlich des Sulfatgehaltes ein schwacher chemischer Angriff vorliegt. Insofern wird zur Verbesserung der Korrosionsbeständigkeit und zur Reduzierung des Sulfattreibens empfohlen, einen HS-Zement mit hohem Sulfatwiderstand zu verwenden. Es wurden auch Natrium- und Chloridanteile festgestellt. Natrium ist für Beton nicht aggressiv. Der Chloridgehalt liegt unter den bisher bekannten Werten.

Es wurden auch betontechnologische Untersuchungen an dem Sandbeton, und zwar sowohl am Frischbeton als auch am Festbeton für die Rezepturen 1 und 2 nach Tabelle 1 durchgeführt. Der Frischbeton zeigte in beiden Fällen ein gutes Zusammenhaltevermögen, eine gute Fließfähigkeit und ein Erstarrungsverhalten, das den Erfordernissen beim Einbau unter Wasser entspricht. Die Frischbetonrohdichte mit etwa 2,10 kg/m³ ist verhältnismäßig hoch. Die Schwindneigung des Betons ist gering. Berechnungen und erste Untersuchungen lassen auf ähnlich günstige Eigenschaften der Rezeptur 3 schließen.

Ferner wurden an dem Festbeton die Druckfestigkeit am Würfel und am Zylinder, die zentrische Zugfestigkeit, die Biegezugfestigkeit, der Elastizitätsmodul, die Wassereindringtiefe und der Chloridgehalt geprüft. Die Ergebnisse der Druckfestigkeitsprüfung sind für die Rezeptur 1 und die Rezeptur 2 in Abhängigkeit von der Erhärtungstemperatur bei 5°C bzw. 20°C in Tabelle 2 angegeben. Die Ergebnisse weiterer Prüfungen für diese Rezepturen zeigt Tabelle 3.

**Tabelle 2**

| **Druckfestigkeit (N/mm²)** | **Rezeptur 1** | **Rezeptur 1** | **Rezeptur 2** | **Rezeptur 2** |
|---|---|---|---|---|
| Würfeldruckfestigkeit | 20°C | 5°C | 20°C | 5°C |
| 0 Tage | 0 | 0 | 0 | 0 |
| 1 Tag | 17,5 | 0 | 2,8 | 0 |
| 2 Tage | 30 | 10 | 4,8 | 1,5 |
| 7 Tage | 44,3 | 27,3 | 30,8 | 13,3 |
| 28 Tage | 62,5 | 54,3 | 45 | 35 |
| 56 Tage | 77,5 | 75,5 | 62 | 54 |
| Zylinderdruckfestigkeit | | | | |
| 7 Tage | - | 27,5 | - | 20,9 |
| 28 Tage | 60,9 | 55,2 | 52,4 | 41,3 |

**Tabelle 3**

| **Prüfung** | **Rezeptur 1** | **Rezeptur 2** |
|---|---|---|
| Festbetonrohdichte | 2,20 / 2,17 kg/dm³ | 2,18 / 2,18 kg /dm³ |
| Zentrische Zugfestigkeit | 3,84 N/mm² | 2,95 N/mm² |
| Elastizitätsmodul | 31600 N/mm² bei 20°C | 27300 bei 20°C |
| | 28000 N/mm² bei 5°C | 22010 bei 5°C |
| Wassereindringtiefe | 16 mm | 5 mm |
| Schwindrinne | +0,04 / -0,07 | +0,10 / -0,15 |
| Erosionsprüfung Turbulenzgerät Bauart BAW Karlsruhe | 1,90 M-% | 0,20 M-% |
| Chloridgehalt am Festbeton | 0,45% | 0,20% |

Wie aus Tabelle 2 hervorgeht, sind bspw. nach 28 Tagen Würfeldruckfestigkeiten für die Rezeptur 1 von 62,5 N/mm² bei einer Erhärtungstemperatur von 20°C bzw. von 54,3 N/mm² bei 5°C und für die Rezeptur 2 von 45 N/mm² bei einer Erhärtungstemperatur von 20°C und von 35 N/mm² bei 5°C ermittelt worden. Die 56-Tage-Werte der Würfeldruckfestigkeiten betragen mehr als 75 N/mm² für die Rezeptur 1. Die Zylinderdruckfestigkeiten liegen im ähnlichen Bereich, vgl. Tabelle 2.

Simulationen und Berechnungen zeigen bei der Rezeptur 3 ähnliche Betondruckfestigkeitswerte, die sich jedoch erst nach längeren, vertretbaren Erhärtungszeiten einstellen.

Die ermittelten Druckfestigkeiten sind unerwartet hoch. Sie lassen sich nicht mit den geltenden Regeln der Betontechnologie, also dem generellen funktionalen Zusammenhang zwischen dem äquivalenten Wasser/Zement-Wert und der Betondruckfestigkeit erklären. Eine mögliche Erklärung ist, dass hier die Flugasche eine wesentlich höhere Wirksamkeit hat, die wahrscheinlich auf eine bisher unbekannte Wechselwirkung zwischen der Flugasche und dem Meerwasser oder dem Zementleim zurückzuführen ist. Es ist jedoch nicht gänzlich geklärt, ob nicht andere Gegebenheiten für die erhöhte Wirksamkeit der Flugasche bei der erfindungsgemäßen Betonzusammensetzung alleine oder mit ursächlich sind.

Der Einfluss der Erhärtungstemperatur auf die Festigkeitsentwicklung geht ebenfalls zum Teil aus der Tabelle 2 hervor. Untersuchungen haben gezeigt, dass im jungen Alter des Betons die höhere Temperatur (hier 20°C) den Erhärtungsvorgang beschleunigt, während eine Erhärtung bei niedrigeren Temperaturen (hier 5°C) zu höheren Festigkeiten führt.

Auch die Zugfestigkeit mit 3,84 N/mm² (Rezeptur 1) bzw. 2,95 N/mm² (Rezeptur 2) hat sich als ausreichend erwiesen. Ähnliche Werte werden für die Rezeptur 3 erwartet.

Die Erosionsfestigkeit des Frischbetons wurde in einem Turbulenzgerät mit positivem Ergebnis geprüft. Der Materialverlust durch Abspülung beträgt bei der Rezeptur 1 nicht mehr als 1,90 Masse-% und bei der Rezeptur 2 sogar nicht mehr als 0,20 Masse-%. Die Ergebnisse lassen auf eine für eine freie Fallhöhe des Frischbetons im Wasser von wenigstens zwei Metern, sogar mehr als 3 Metern ausreichende Erosionsbeständigkeit schließen. Mit einem Verpressversuch unter Druck von 6 bar ist eine ausreichende Pumpfähigkeit für Tiefen über 50 m nachgewiesen worden. Die Ergebnisse sind auch auf die Rezeptur 3 übertragbar. Es wird angenommen, dass mit der erfindungsgemäßen Betonzusammensetzung eine Pumpfähigkeit bis zu 150 m sichergestellt werden kann. Somit eignet sich die Betonzusammensetzung gut für Offshore-Anwendungen, um bspw. Windkraftanlagen, Sendemasten und dgl. auf hoher See zu verankern.

Die hohe Wirksamkeit der Flugasche ermöglicht es, den Anteil der Flugasche zu vergrößern. Bspw. ist der Anteil der Flugasche bei der Rezeptur 2 sogar höher als der des Zementes. Untersuchungen zeigen, dass im letzteren Fall das Verhältnis zwischen Flugasche und Zement ggfs. noch weiter, bis auf 2:1 erhöht werden könnte, ohne an den guten Eigenschaften des erfindungsgemäßen Betons einzubüßen. Dabei können die Herstellungskosten weiter reduziert werden.

Außerdem weist der Festbeton bei den Rezepturen 1 und 2 eine sehr hohe Festbetonrohdichte von etwa 2,20 kg/dm³ auf, vgl. Tabelle 3, die auch bei der Rezeptur berechnet worden ist. Ein ausreichend dichter und fester Verbund des erfindungsgemäßen Betons ist für die Rezepturen 1 und 2 auch durch mikroskopische Untersuchungen an der Betonstruktur mittels Dünnschliffverfahren und der Bindemittelstruktur mittels Rasterelektronenmikroskopie bestätigt worden. Die Rezeptur 3 sollte ebenfalls ein dichtes Gefüge ergeben.

Wie weiter der Tabelle 3 entnehmbar, ist der Chloridgehalt im Festbeton bei 0,45 % für die Rezeptur 1 und bei 0,20 % für die Rezeptur 2 ermittelt worden. Bei der Rezeptur 3 ist ein Wert von 0,4 % ermittelt worden. Dieser Chloridgehalt ist auf das sowohl im Meerwasser als auch im Meersand vorhandene Chlorid zurückzuführen. Es ist auch zu beachten, dass bei Einbau im Meer Chlorid von außen in den Beton eindringen kann. Jedoch ist festgestellt worden, dass ein Teil des Chlorids dauerhaft gebunden ist. Außerdem weist der Beton ein derart dichtes Gefüge auf, dass das Eindringen des Chlorids zum Erliegen kommt. Eine Diffusion erfolgt sehr langsam, da das Porengefüge mit Wasser gefüllt ist und kein Druck vorhanden ist. Insgesamt hat sich die erfindungsgemäße Betonzusammensetzung, was den Chloridgehalt anbetrifft, als für Meerwasser-Betonbauten geeignet erwiesen.

Die hohe Dichte und Druckfestigkeit der erfindungsgemäßen Betonzusammensetzung bilden eine Grundlage für eine hohe Dauerhaftigkeit des Betons. Vorteilhafterweise haben die Untersuchungsergebnisse auch keine Empfindlichkeit der Gesteinskörnungen auf die Alkali-Kieselsäure-Reaktion gezeigt. Erfindungsgemäß wird aber gezielt Flugasche, insbesondere aus Steinkohleabfeuerung gewonnene und gefilterte Flugasche, sowie ein Zement mit niedrigem wirksamen Alkaligehalt, sog. Na-Zement, vorzugsweise ein hüttensandhaltiger Zement, verwendet, weil die Filterasche und der Hüttensand Alkalien gut binden und deren Konzentration in der Porenlösung vermindern. Außerdem aktiviert Na-Zement die Filterasche nur in sehr geringem Umfang. Darüber hinaus kann durch den Einsatz von Filterasche und eines hüttensandhaltigen Zementes auch der Thaumasitbildung und der Spätbildung von Ettringit im erhärteten Beton und somit einem Sulfattreiben auch beim Einsatz im sulfathaltigen Meerwasser wirksam vorgebeugt werden. Zu diesem Zweck verwendet die erfindungsgemäße Betonzusammensetzung vorzugsweise einen Zement, der sich durch einen hohen Sulfatwiderstand und eine möglichst geringe Hydratationswärmefreigabe auszeichnet. Vorteilhaft in diesem Zusammenhang ist auch der geringe Zementanteil, durch den die Wärmeentwicklung in dem Bauteil verringert wird. Auf die Hydratationswärme zurückzuführende Verformungen und Spannungen können deutlich reduziert werden. Die Rissbildung wird minimiert bzw. ist kontrollierbar. Insgesamt sind die Voraussetzungen gegeben, damit der erfindungsgemäße Festbeton für eine Lebensdauer von wenigstens 20 Jahren dauerhaft ist.

Obwohl noch weitere Untersuchungen nötig sind, wird aufgrund bisheriger Erkenntnisse angenommen, dass sich mit dem CEM III-Zement die vorteilhafteste Betonzusammensetzung erzielen lässt, wenn dessen Bestandteile aufeinander und hinsichtlich der Reaktionen mit der Steinkohleflugasche und dem Fließmittel, bspw. Palycarboxylatether oder dgl., abgestimmt werden. Bspw. werden hierzu die maximalen Hüttensandanteile zu 70 bis 75 % sowie günstige Mahlfeinheiten festgelegt. Ein nach der Rezeptur 3 hergestellter Beton weist ein besonders dichtes Gefüge auf, das eine sehr geringe Kapillarporosität besitzt. Damit wird der Ionenaustausch mit dem umgebenden Meerwasser deutlich verlangsamt, was die auf die Zusammensetzung des Meerwassers zurückzuführenden Schadenspotentiale deutlich reduziert. Zudem wird wegen der langsameren und niedrigeren Temperaturentwicklung eines ein CEM III-Zement verwendenden Betons ein reduziertes Rissbildungsrisiko und ein verminderter Eintritt von Schadstoffen in den Beton erwartet.

Ein hüttensandreicher CEM III/B NA-Zement bringt einen sehr niedrigen Alkalieintrag in den Beton mit sich, so dass eine Beton schädigende Alkali-Kieselsäure-Reaktion ausgeschlossen oder zumindest auf ein Minimum reduziert werden kann. Dies, selbst wenn vor Ort aus dem Meer gewonnene Sande und Gesteinskörnungen, die Flint- und Opalsand-Fragmente enthalten, und alkalireiches Meerwasser als Anmachwasser verwendet wird, die den Reaktionsprozess fördern.

Ferner kann durch den Einsatz eines sulfatbeständigen CEM III/-Betons mit HS-Qualität, durch das dichte Betongefüge, das damit erreicht werden kann, und durch die gezielte Zugabe von Steinkohleflugasche der Thaumasitbildung äußerst wirksam entgegengewirkt werden.

Nicht zuletzt wird durch den Einsatz von CEM III/B-Zement und Flugasche eine Chlormigration in den Beton besonders stark, z.B. gegenüber Normalbetonen bei vergleichbaren w/z-Werten um mehr als das Zwanzigfache, reduziert.

Die erfindungsgemäßen Vorteile lassen sich aber auch mit anderen hüttensandhaltigen Zementarten, insbesondere z.B. mit einem CEM II/B-Zement, erzielen.

Durch die Erfindung ist eine Meerwasser beständige Betonzusammensetzung geschaffen, die sich zur Verwendung als Unterwasserbeton oder für Betonbauten, die mit Meerwasser in Berührung kommen, gut eignet. Es können Betonbauten hoher Feststoffdichte und Druckfestigkeit geschaffen werden, die den chemischen, erosiven und biogenen Angriffen aus dem Meer während der Lebensdauer standhalten. Durch den Zuschlagstoffeinsatz von aus dem Meer gewonnenen, unaufbereiteten Kiesen und Salzen sowie den Einsatz von Meerwasser als Anmachwasser ist ein kostengünstiger, kontinuierlicher Herstell- und Einbauprozess unter Offshore-Bedingungen möglich. Natürliche Rohstoffe werden geschont und die Kosten für die Betonzusammensetzung sowie die Baumaßnahme werden deutlich gesenkt.

Es ist verständlich, dass die vorstehende Beschreibung lediglich der Erläuterung der wesentlichen Aspekte der Erfindung dient. Insbesondere sind die angegebenen Rezepturen und ermittelten Kennwerte nur beispielhafter Natur. Es ist klar, dass verschiedene Abwandlungen und Modifikationen möglich sind. Insbesondere kann anstelle von Ostseekies und Ostseewasser auch Kies und Wasser aus anderen Meeren, bspw. der Nordsee, eingesetzt werden. Die Lagerstätte des Meerkieses sollte jedoch vorzugsweise mit der Lagerstätte des Meerwassers übereinstimmen, da ein sich über Jahrhunderte hinweg eingestelltes chemisches Gleichgewicht den positiven Eigenschaften des Betons zugute kommt. Vorzugsweise ist die Lagerstätte in der Nähe des Einsatzortes gelegen, weil dann auch die chemischen Reaktionen zwischen dem Beton und der Umgebung verringert sind. Der relative Anteil von Filterasche in Bezug auf den Zement kann weiter vergrößert werden. Während die Rezepturen nach Tabelle 1 ein Unterwassercompoundmittel und ein Fließmittel enthalten, können diese Mittel z.B. bei Einbau auf Land anteilsmäßig verringert oder weggelassen werden. Es können auch andere Zusatzmittel und Zusatzstoffe, wie Beschleuniger, Verzögerer, Luftporenbildner oder Dichtungsmittel, je nach Anwendung hinzugefügt werden, um bestimmte Eigenschaften des Frisch- bzw. Festbetons zu erzielen. Insofern ist ersichtlich, dass die Erfindung nicht durch die hier angegebenen Beispiele beschränkt ist, sondern durch die beigefügten Ansprüche definiert ist.

## Patentansprüche

1. Betonzusammensetzung, insbesondere Meerwasser beständige Betonzusammensetzung, mit
a) einer Gesteinskörnung als Zuschlagstoff,
wobei die Gesteinskörnung unaufbereitet und unklassiert eingemischten Meereskies, so wie er auf dem Meeresboden vorhanden ist, mit
einem Sandanteil mit der Korngröße bis 4 mm von wenigstens 70 Masse-% bezogen auf die Gesamtmasse der Gesteinskörnung aufweist,
und
b) einem damit vermischten
- CEM II/A- oder CEM II/B- Portlandzement, wobei der Zementgehalt zur Verwendung als Unterwasserstahlbeton weniger als 280 kg/m³ beträgt,
oder
- CEM III/B- Hochofenzement, wobei der Zementgehalt zur Verwendung als Unterwasserstahlbeton mehr als 280 kg/m³ beträgt,
als Bindemittel
und
c) Anmachwasser, wobei das Anmachwasser Meerwasser aufweist.

2. Betonzusammensetzung nach Anspruch 1, **dadurch gekennzeichnet,**
**dass** der Meereskies und das Meerwasser eine gemeinsame Lagerstätte aufweisen, der sie entnommen werden.

3. Betonzusammensetzung nach Anspruch 2, **dadurch gekennzeichnet,**
**dass** die Lagerstätte des Meereskieses und des Meerwassers sich in der Nähe des Einsatzortes der Betonzusammensetzung befindet.

4. Betonzusammensetzung nach Anspruch 2, **dadurch gekennzeichnet,**
**dass** sie Ostseekies und Ostseewasser aufweist, wobei das Anmachwasser einen Salzgehalt von weniger als 3 %, vorzugsweise weniger als 2 %, aufweist.

5. Betonzusammensetzung nach Anspruch 1, **dadurch gekennzeichnet,**
**dass** die Gesteinskörner eine im wesentlichen kugelförmige Gestalt mit glatter Oberfläche aufweisen.

6. Betonzusammensetzung nach Anspruch 1, **dadurch gekennzeichnet,**
**dass** die Gesteinskörnung einen Komdurchmesser von maximal 32 mm, vorzugsweise maximal 24 mm, aufweist.

7. Betonzusammensetzung nach Anspruch 1, **dadurch gekennzeichnet,**
**dass** der Wassergehalt der Gesteinskörnung weniger als 10 Masse-%, vorzugsweise weniger als 8 Masse-%, bezogen auf die Gesamtmasse der Gesteinskörnung, beträgt.

8. Betonzusammensetzung nach Anspruch 1, **dadurch gekennzeichnet,**
**dass** sie Flugasche aufweist.

9. Betonzusammensetzung nach Anspruch 15, **dadurch gekennzeichnet,**
**dass** die Flugasche durch Steinkohlefilterasche gebildet ist.

10. Betonzusammensetzung nach Anspruch 15, **dadurch gekennzeichnet,**
**dass** die Flugasche und der Zement in einem Verhältnis von wenigstens 1:2 enthalten sind.

11. Betonzusammensetzung nach Anspruch 15, **dadurch gekennzeichnet,**
**dass** die Flugasche und der Zement in einem Verhältnis von etwa 0,8 enthalten sind.

12. Betonzusammensetzung nach Anspruch 15, **dadurch gekennzeichnet,**
**dass** die Flugasche und der Zement in einem Verhältnis von wenigstens 1:1 enthalten sind.

13. Betonzusammensetzung nach Anspruch 1, **dadurch gekennzeichnet,**
**dass** sie einen Anteil eines Stabilisators zur Erhöhung des Zusammenhalts des Betons unter Wasser enthält.

14. Betonzusammensetzung nach Anspruch 1, **dadurch gekennzeichnet,**
**dass** sie einen Anteil eines Fließmittels, insbesondere eines Hochleistungsverflüssigers, aufweist.

## Claims

1. Concrete composition, especially seawater-containing concrete composition, comprising
a) stone grain or minerals as aggregate,
whereby the aggregate is unprocessed and unclassified, interspersed with sea gravel, such as is to be found on the seabed, containing
a sand component of grain size up to 4 mm, having at least 70 % percentage by mass, relative to the total mass of the aggregate,
and
b) mixed with this,
- CEM II/A or CEM II/B Portland cement, whereby its cement content for use as reinforced underwater concrete is less than 280 kg/m³,
or
- CEM III/B blast furnace cement, whereby its cement content for use as reinforced underwater concrete is more than 280 kg/m³,
as bonding agent
and
c) mixing water, whereby the mixing water contains sea water.

2. Concrete composition according to claim 1, **characterized in that** the sea gravel and the sea water are from the same location from which they are taken.

3. Concrete composition according to claim 2, **characterized in that** the site(Lagerstätte) of the sea gravel and sea water is near the place where the concrete composition is to be deployed.

4. Concrete composition according to claim 2, **characterized in that** it contains sea gravel and sea water from the Baltic Sea, whereby the mixing water has a salinity of less than 3 %, preferably ofless than 2 %.

5. Concrete composition according to claim 1, **characterized in that** the grains of stone have a basically circular shape with a smooth surface.

6. Concrete composition according to claim 1, **characterized in that** the grains of stone have a grain diameter of max. 32 mm, and preferably of max. 24 mm.

7. Concrete composition according to claim 1, **characterized in that** the water content of the grains of stone is less than 10 % percentage by mass, and preferably less than 8 % percentage by mass, relative to the total mass of the grains of stone.

8. Concrete composition according to claim 1, **characterized in that** it contains fly ash.

9. Concrete composition according to claim 15, **characterized in that** the fly ash is made up of hard coal fly ash.

10. Concrete composition according to claim 15, **characterized in that** the fly ash and the concrete are contained in a ratio of at least 1:2.

11. Concrete composition according to claim 15, **characterized in that** the fly ash and the concrete are contained in a ratio of circa 0.8.

12. Concrete composition according to claim 15, **characterized in that** the fly ash and the concrete are contained in a ratio of at least 1:1.

13. Concrete composition according to claim 1, **characterized in that** it contains a proportion of a stabilizer to increase the coherence of the concrete under water.

14. Concrete composition according to claim 1, **characterized in that** it contains a proportion of a plasticizer, particularly of a high-performace superplasticizer.

## Revendications

1. Composition de béton, notamment composition de béton résistant à l'eau de mer,
comprenant
a) un granulat en tant qu'adjuvant,
ledit granulat contenant du gravier marin incorporé par mélange à l'état non traité et non calibré, du type se présentant sur les fonds marins, renfermant
une proportion de sable dont la grosseur de grain atteint jusqu'à 4 mm, représentant au moins 70 % en masse par rapport à la masse totale dudit granulat,
et,
b) en tant que liant mélangé audit granulat,
- un ciment Portland CEM II/A ou CEM II/B, la teneur en ciment représentant moins de 280 kg/m³, en vue de l'utilisation en tant que béton armé pour eaux souterraines,
ou
- un ciment de haut fourneau CEM III/B, la teneur en ciment représentant plus de 280 kg/m³, en vue de l'utilisation en tant que béton armé pour eaux souterraines,
et
c) de l'eau de gâchage, ladite eau de gâchage contenant de l'eau de mer.

2. Composition de béton selon la revendication 1, **caractérisée par le fait que** le gravier marin et l'eau de mer présentent un site commun de stockage, dont ils sont prélevés.

3. Composition de béton selon la revendication 2, **caractérisée par le fait que** le site de stockage du gravier marin et de l'eau de mer se trouve à proximité du site d'emploi de ladite composition de béton.

4. Composition de béton selon la revendication 2, **caractérisée par le fait qu'**elle contient du gravier de la mer Baltique et de l'eau de la mer Baltique, l'eau de gâchage renfermant une teneur en sel inférieure à 3 %, de préférence inférieure à 2 %.

5. Composition de béton selon la revendication 1, **caractérisée par le fait que** les grains de roche possèdent une configuration pour l'essentiel sphérique, à surface lisse.

6. Composition de béton selon la revendication 1, **caractérisée par le fait que** le granulat présente un diamètre de grain de 32 mm au maximum, préférentiellement de 24 mm au maximum.

7. Composition de béton selon la revendication 1, **caractérisée par le fait que** la teneur en eau du granulat représente moins de 10 % en masse, de préférence moins de 8 % en masse par rapport à la masse totale dudit granulat.

8. Composition de béton selon la revendication 1, **caractérisée par le fait qu'**elle contient des cendres volantes.

9. Composition de béton selon la revendication 1, **caractérisée par le fait que** les cendres volantes sont constituées par des cendres de filtration du charbon.

10. Composition de béton selon la revendication 1, **caractérisée par le fait que** les cendres volantes et le ciment sont renfermés suivant un rapport d'au moins 1:2.

11. Composition de béton selon la revendication 1, **caractérisée par le fait que** les cendres volantes et le ciment sont renfermés suivant un rapport d'environ 0,8.

12. Composition de béton selon la revendication 1, **caractérisée par le fait que** les cendres volantes et le ciment sont renfermés suivant un rapport d'au moins 1:1.

13. Composition de béton selon la revendication 1, **caractérisée par le fait qu'**elle contient une proportion d'un stabilisateur, en vue d'accroître la cohésion du béton sous l'eau.

14. Composition de béton selon la revendication 1, **caractérisée par le fait qu'**elle contient une proportion d'un agent de fluidification, en particulier d'un fluidificateur à haute performance.
